# FASCICULE DE BREVET EUROPEEN

(11) **EP 2 887 007 B1**
(45) Date de publication et mention de la délivrance du brevet: **02.08.2017**
(21) Numéro de dépôt: 13198642.4
(22) Date de dépôt: 19.12.2013
(51) Int. Cl.: G01B 7/31, F16C 32/04, G04B 17/32, G04B 31/00

(54) **Dispositif de posage pour le contrôle de composants**
Spannvorrichtung für die Kontrolle von Bauteilen
Setting device for monitoring components

(43) Date de publication de la demande: 24.06.2015
(73) Titulaire: Montres Breguet SA, 1344 L'Abbaye (CH)
(72) Inventeur: Colangelo, Marco Mario, 2028 Vaumarcus (CH); Maréchal, Sylvain, 39220 Bois-d'Amont (FR); Douffet, Joel, 1347 Le Sentier (CH); Fontaine, Sébastien, 39150 St. Laurent en G. (FR); Sarchi, Davide, 1020 Renens (CH); Besson, Yoanne, 25300 Houtaud (FR); Sancet, Simon, 39400 Bellefontaine (FR)
(74) Mandataire: Ravenel, Thierry Gérard Louis

(56) Documents cités:
- EP-A1- 2 450 758
- GB-A- 739 979
- US-A- 4 340 038

## Description

La présente invention concerne un dispositif de posage pour la mesure ou le contrôle de composants de faible taille, notamment pour le centrage d'un composant mobile rotatif ou pivotant. Un domaine d'application particulier de l'invention concerne la mesure ou le contrôle de composants de mécanismes horlogers.

La mesure des axes et mobiles horlogers doit être effectuée en positionnant les échantillons, sans induire d'incertitude de mesure. Conventionnellement, plusieurs technologies de mesure sont utilisées pour contrôler toutes les géométries des composants mobiles, ces opérations de contrôle demandant des ressources conséquentes en personnel qualifié et en matériel.

Des méthodes de contrôle par vision permettraient une mesure de plusieurs géométries à contrôler, mais la difficulté de ces méthodes est d'assurer que le maintien en position des pièces ne masque pas les surfaces à contrôler. Par ailleurs, pour le posage des pièces horlogères tournantes, il faut assurer que l'axe de rotation soit maintenu continûment en équilibre, sans vibration notable, pendant le test de rotation de la pièce.

Les techniques de mesure conventionnelles utilisées à ce jour ne permettent pas de mesurer des défauts d'inclinaisons des mobiles avec une précision inférieure à 100 microns, sur la distance radiale entre les deux extrémités de l'axe du mobile.

On connait également du document EP 2 450 758 un pivot magnétique coopérant par ses extrémités libres avec des masses polaires.

Le document GB 739979 décrit un palier magnétique pour un organe rotatif d'un capteur électrique dont l'axe est maintenue entre deux aimants permanents.

Le document US 4 340 038 décrit un dispositif permettant de transférer de l'énergie depuis un appareil externe vers un appareil implanté dans le crâne qui utilise un élément concentrateur de flux magnétique.

Un objet de l'invention est de fournir un dispositif de posage pour le contrôle ou la mesure de composants de faible taille, à l'échelle millimétrique ou moins, qui soit précis, fiable, et économique à mettre en oeuvre.

Un objet particulier de l'invention est de fournir un dispositif de posage pour le contrôle ou la mesure par un appareil permettant de visionner des composants de faible taille, qui soit précis, fiable, et économique à mettre en oeuvre.

Un objet particulier de l'invention est de fournir un dispositif de posage pour le contrôle ou la mesure par un appareil permettant de visionner des composants de mécanismes horlogers, qui soit précis, fiable, et économique à mettre en oeuvre.

Un objet particulier de l'invention est de fournir un appareil de mesure et de contrôle comprenant un dispositif de posage pour le contrôle ou la mesure par un appareil permettant de visionner des composants de faible taille tels que des composants de mécanismes horlogers, qui soit précis, fiable, et économique à mettre en oeuvre.

Il est avantageux de fournir un dispositif de posage intégrant un palier axial à très faible usure pour un organe rotatif.

Il est avantageux de fournir un dispositif de posage intégrant un palier axial ayant un rendement élevé.

Il est avantageux de fournir un dispositif de posage compact et robuste.

Il est avantageux de fournir un dispositif de posage permettant d'assurer la mise en place rapide d'une pièce à mesurer ou à contrôler par un opérateur non qualifié.

Il est avantageux de fournir un dispositif de posage permettant de maintenir en position stable des pièces tournantes durant la mesure.

Il est avantageux de fournir un dispositif de posage permettant d'assurer l'orientation de l'axe de rotation des pièces de révolution durant le contrôle des cotes en statique et en dynamique.

Il est avantageux de fournir un appareil de mesure permettant d'accepter des formes de pièces variées, telles que axes longs, courts, étagés, avec roue et pignon, et d'autres composants de mécanismes horlogers.

Des objets de l'invention sont réalisés par un dispositif de posage selon la revendication 1. Les revendications dépendantes décrivent des aspects avantageux de l'invention.

Dans la présente on décrit un dispositif de posage comprenant un support comprenant un corps, une surface de travail disposée sur une face du support, un élément de concentration de champ monté dans un logement du support, et un générateur de champ magnétique et/ou électrique selon la variante. L'élément de concentration de champ comprend une partie de base et une partie de concentration de champ disposées à proximité de la surface de travail, la partie de base comprenant une surface de base axiale ayant une largeur moyenne ou diamètre D2 à sa périphérie plus grand qu'un diamètre D1 de la partie de concentration de flux au niveau d'une surface d'extrémité axiale. La partie de base est reliée à la partie de concentration de flux par une surface courbe.

La surface courbe de l'élément de concentration a de préférence une forme continue. Dans une variante, la surface courbe suit une forme torique avec un rayon de courbure constant. Dans une autre variante avantageuse, la surface courbe suit une forme torique avec un rayon de courbure variable, la partie de courbure ayant un grand rayon disposé du côté de la partie de concentration de flux. La surface courbe peut avantageusement rejoindre la partie de concentration de flux de manière tangentielle. La partie de concentration de flux peut avantageusement comprendre une section cylindrique et une surface d'extrémité axiale plane ou essentiellement plane orthogonale à l'axe du dispositif de posage.

Dans une forme d'exécution particulière, le diamètre de la surface d'extrémité axiale de l'élément de concentration est compris entre 0,15 et 0,6 millimètres, le diamètre ou la largeur de la partie de base est compris entre 2 et 3 millimètres, et le rayon de la surface courbe est compris entre 1,5 et 4 millimètres.

Dans une forme d'exécution particulière, le matériau de l'élément de concentration de champ est en un acier magnétiquement doux, caractérisé par une perméabilité magnétique maximale µ_{R} égale ou supérieure à 100 et un champ coercitif Hc égal ou inférieur à 5 kA/m.

Dans une forme d'exécution particulière, le matériau de l'élément de concentration de champ est un diélectrique dont la rigidité diélectrique est égale ou supérieure à 10 kV/mm.

Dans une forme d'exécution particulière, le générateur de champ est un aimant permanent en terres rares ayant un champ de saturation supérieur à 1 Tesla.

Dans une forme d'exécution, le générateur de champ peut comprendre un condensateur électrique.

Le générateur de champ peut être monté dans une cavité formée dans le corps du support, le générateur de champ venant en butée ou à proximité d'une surface de base axiale d'une partie de l'élément de concentration de champ.

Le matériau de la surface de travail peut avantageusement être choisi parmi des matériaux ayant une grande dureté et de bonnes propriétés tribologiques, comprenant des corindons, le diamant ou d'autres pierres précieuses, et des matières céramiques.

La surface de travail peut faire partie d'un embout assemblé sur une paroi d'extrémité fermant le logement. Le logement peut comprendre des parois cylindriques et la paroi d'extrémité est sous forme essentiellement d'un disque circulaire avec un orifice au centre pour la fixation de l'embout.

Des objets de l'invention sont atteints par un instrument de mesure ou de contrôle de pièces de petite taille selon la revendication 16. On décrit ici un instrument de mesure ou de contrôle comprenant un bâti supportant un premier dispositif de posage et un deuxième dispositif complémentaire de posage, le premier dispositif de posage comprenant un support comprenant un corps, une surface de travail disposée sur une face du support, un élément de concentration de champ monté dans un logement du support, et un générateur de champ magnétique et/ou électrique selon la variante. L'élément de concentration de champ comprend une partie de base et une partie de concentration de champ disposées à proximité de la surface de travail, la partie de base comprenant une surface de base axiale ayant une largeur moyenne ou un diamètre à sa périphérie plus grand qu'un diamètre de la partie de concentration de flux au niveau d'une surface d'extrémité axiale, les deux dispositifs de posage étant alignés sur un même axe A, les dispositifs de posage étant orientés l'un par rapport à l'autre de manière opposée et configurés pour recevoir un organe à mesurer ou à contrôler entre les dispositif de passages.

Le bâti peut avantageusement comprendre un dispositif à glissière permettant de varier la distance entre les deux dispositifs de posage afin de pouvoir mesurer ou contrôler des organes de longueurs différentes.

Dans une forme d'exécution avantageuse, l'instrument est configuré pour qu'une première extrémité d'un organe à contrôler soit en appui contre un premier des dispositifs de posage, l'autre extrémité étant séparée par un petit espace du dispositif complémentaire de posage. Cette configuration est obtenue en ayant une force d'attraction magnétique et/ou électrique appliquée par le premier dispositif de posage plus grande que par le dispositif complémentaire de posage.

Le dispositif de posage de l'instrument peut avantageusement comprendre l'une ou plusieurs caractéristiques du dispositif décrit précédemment.

Des buts de l'invention sont aussi atteints par un appareil de mesure ou de contrôle optique comprenant une caméra optique et intégrant l'instrument de mesure ou de contrôle.

D'autres buts et aspects avantageux de l'invention apparaitront à la lecture des revendications, ainsi que de la description détaillée de formes d'exécution ci-après, et des dessins annexés, dans lesquels :
La figure 1 est une vue d'un instrument de mesure selon une forme d'exécution de l'invention ;
Les figures 2a et 2b sont des vues en coupe et de face d'un dispositif de posage selon une forme d'exécution de l'invention ;
La figure 3a est une vue en perspective d'un élément de concentration de champ d'un dispositif de posage selon une forme d'exécution de l'invention ;
La figure 3b est une vue de côté d'une variante d'un élément de concentration de champ d'un dispositif de posage selon une forme d'exécution de l'invention ;
Les figures 4a, 4b sont des photographies prises par une caméra optique d'un appareil de mesure ou de contrôle selon une forme d'exécution de l'invention, un organe à contrôler étant en cours d'inspection, la figure 4a montrant l'organe entier et la figure 4b une vue détaillé d'une extrémité de l'organe.

Faisant référence aux figures, un instrument de mesure 1 selon une forme d'exécution de l'invention comprend un bâti 9 supportant un dispositif de posage 2 et un dispositif complémentaire de posage 4, les deux dispositifs de posage étant alignés sur un même axe A, les dispositifs de posage étant orientés l'un par rapport à l'autre de manière opposée et configurés pour recevoir un organe à mesurer ou à contrôler 3 entre les dispositifs. Le bâti 9 peut comprendre un dispositif à glissière ou d'autres éléments amovibles permettant de varier la distance entre les deux dispositifs de posage 2, 4 afin de pouvoir mesurer ou contrôler des organes de longueurs différentes.

Le dispositif de posage est configuré pour concentrer et diriger un champ magnétique, ou dans une variante un champ électrique, ou encore dans une variante une combinaison d'un champ électrique et d'un champ magnétique, afin de centrer un organe à contrôler ou à mesurer 3 en appliquant, selon la variante, une force magnétostatique et/ou électrostatique sur l'organe.

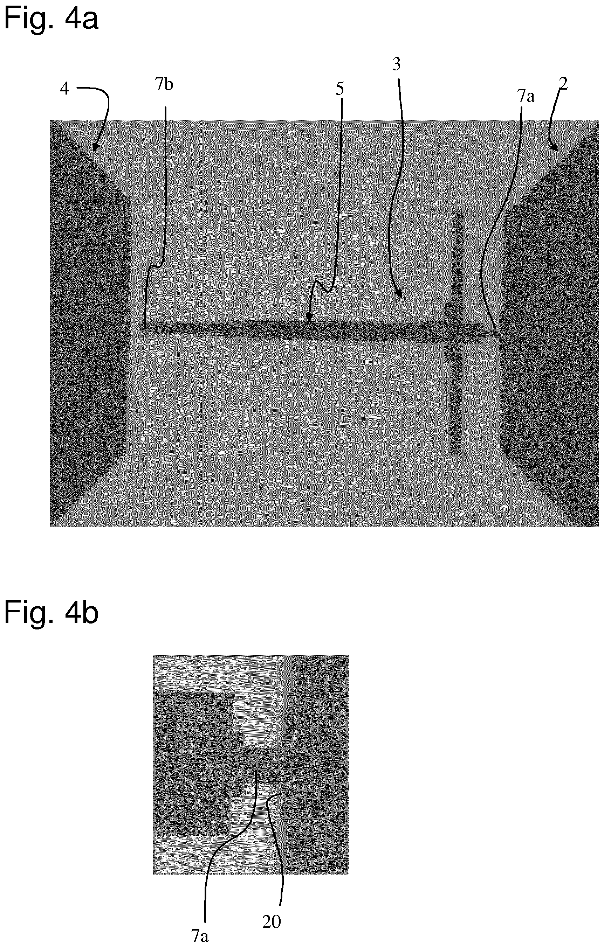

Comme illustré à la figure 4a dans une forme d'exécution préférée, l'instrument de mesure est configuré pour qu'une première extrémité 7a d'un axe 5 de l'organe à contrôler 3 soit en appui contre l'un des dispositifs de posage 2, l'autre extrémité 7b étant séparée par un petit espace de la surface du dispositif complémentaire de posage 4. Cette configuration peut être obtenue en ayant une force d'attraction magnétostatique, et/ou électrostatique selon la variante, appliquée par le dispositif de posage 2 plus grande que par le dispositif complémentaire de posage 4. L'appui d'un organe à contrôler 3 à une seule extrémité permet d'avoir une force de frottement réduite et d'assurer un centrage précis de l'organe à contrôler dépendant uniquement ou principalement des lignes de flux magnétique du champ magnétique, et/ou des lignes de champ électrique selon la variante, entre les deux dispositifs de posage passant par l'organe à contrôler 3. Le bâti 9 peut comprendre des moyens pour effectuer un ajustement fin de la position d'un ou des deux dispositifs de posage pour optimiser l'espace libre entre l'extrémité 7b de l'axe 5 et la surface du dispositif de posage 4.

Dans une forme d'exécution avantageuse, le dispositif de posage est configuré pour concentrer et diriger un champ magnétique. L'utilisation de composants magnétiques dans des instruments de mesure ou de contrôle pour la mesure ou le contrôle des organes rotatifs de mouvements ou mécanismes horlogers ou d'autres mécanismes micromécaniques, est avantageuse parce qu'elle permet de créer des forces importantes et localisées accompagnées de frottements faibles. Cela permet le maintien en équilibre continu, des mobiles de révolutions horlogers, ayant au moins un arbre ferromagnétique ou très perméable magnétiquement, par un champ magnétique créé par 2 bi-pôles magnétiques parallèles et orientés de sorte qu'ils s'attirent.

Le dispositif complémentaire de posage 4 peut avoir une construction suivant les mêmes principes que le dispositif de posage 2, mais ayant une intensité de champ légèrement différente pour les raisons mentionnées ci-dessus. Dans des situations où l'organe à contrôler 3, du fait de sa construction comprend une extrémité qui est attirée plus fortement que l'autre, les deux dispositifs de surface peuvent également être identiques.

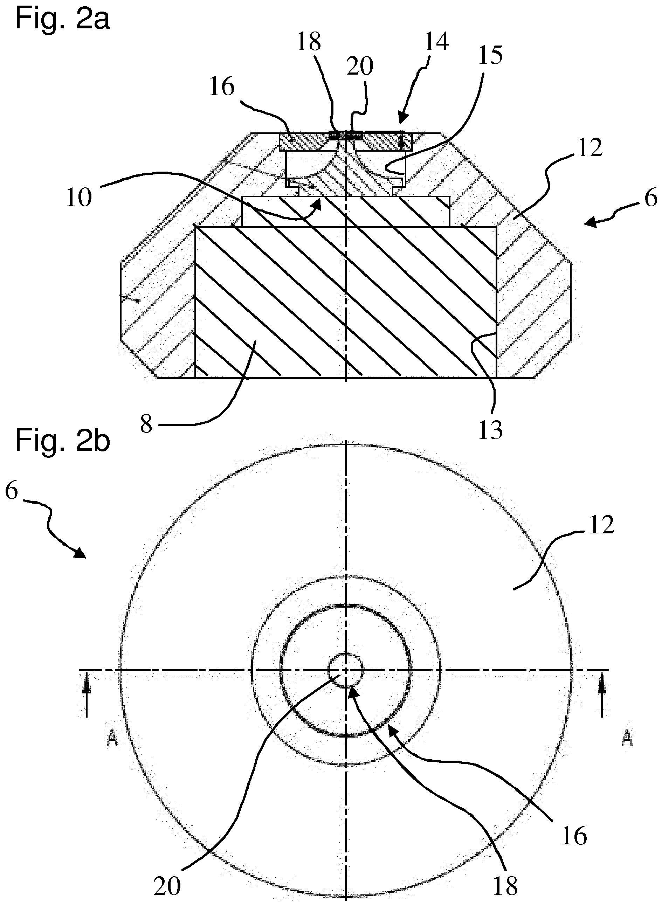

Faisant maintenant référence aux figures 2a, 2b, un dispositif de posage 2 selon une forme d'exécution de l'invention comprend un support 6, un élément de concentration de champ 10 monté dans le support 6, et un générateur de champ 8. Dans une forme d'exécution préférée le générateur de champ comprend un aimant, l'aimant pouvant également être monté dans le support 6. L'aimant peut également être monté en dehors du support 6 en fonction de la géométrie du support, tant que la fonction de l'aimant est remplie, à savoir qu'il est configuré pour appliquer un champ magnétique d'une intensité voulue à l'élément de concentration de champ 10.

Le support 6 peut comprendre un corps 12 avec une cavité 13 dans laquelle le générateur de champ 8 peut être logé ou inséré ou seulement une partie d'un générateur de champ, et un logement 15 configuré pour l'assemblage et le positionnement de l'élément de concentration de champ dans le support. Le support 6 peut comprendre en outre une paroi d'extrémité 14 pour fermer une ouverture donnant accès au logement 15, la paroi d'extrémité 14 comprenant une partie support 16 et un embout 18 présentant une surface de travail 20.

Dans une variante, le logement 15 pour l'assemblage de l'élément de concentration de champ 10 peut être accessible par le côté de la cavité 13, la paroi d'extrémité 14 dans ce cas pouvant être formée solidairement avec le corps 12. La surface de travail 20, dans une variante, peut être directement appliquée et solidaire d'une surface d'extrémité axiale 28 de l'élément de concentration de champ 10.

Dans une forme d'exécution préférentielle, le logement 15 comprend des parois cylindriques et la paroi d'extrémité 14 est réalisée sous forme essentiellement d'un disque circulaire avec un orifice au centre pour la fixation de l'embout 18.

Le matériau de la surface de travail 20 est choisi parmi des matériaux ayant de bonnes propriétés mécaniques, et notamment ayant une dureté élevée ainsi que de bonnes propriétés tribologiques. Des exemples de matériaux répondant à ces critères comprennent des corindons, le diamant et d'autres pierres cristallines précieuses et certaines matières céramiques. On peut utiliser des pierres précieuses naturelles pour former l'embout, ou, dans des variantes, appliquer une couche synthétique par des techniques de déposition connues telles que par plasma ou CVD (chemical vapor déposition).

L'aimant 8 peut être réalisé sous la forme d'un aimant permanent, ou d'un aimant électromagnétique. Dans cette deuxième variante, les bobines d'induction peuvent être disposées en dehors de la cavité 13 formée dans le corps 12, le champ magnétique étant formé par un insert en un matériau magnétique, à savoir un matériau ayant une haute perméabilité magnétique maximale, égale ou supérieure à 100, qui est logée dans la cavité 13 et vient en butée ou en proximité d'une surface de base axiale 26 d'une partie de base 22 de l'élément de concentration de champ.

Dans une autre forme d'exécution, le dispositif de posage 2 peut comprendre un générateur de champ électrique, par exemple un condensateur électrique, en lieu et en place de l'aimant, afin d'appliquer un champ électrique, l'élément de concentration de champ 10 servant à concentrer le champ électrique. Dans cette forme d'exécution, le dispositif de posage peut être utilisé pour la mesure ou le contrôle d'organes amagnétiques, ou ayant une faible perméabilité magnétique. Dans une autre forme d'exécution, le dispositif de posage peut comprendre un générateur de champ magnétique et un générateur de champ électrique pour appliquer à choix, ou simultanément, un champ électrique et un champ magnétique pour le centrage de l'organe à mesurer ou contrôler.

L'appareil de mesure peut comprendre un circuit électrique avec un système de contrôle permettant d'éteindre ou d'allumer le champ magnétique ou électrique ainsi que de contrôler l'intensité du champ en fonction du temps.

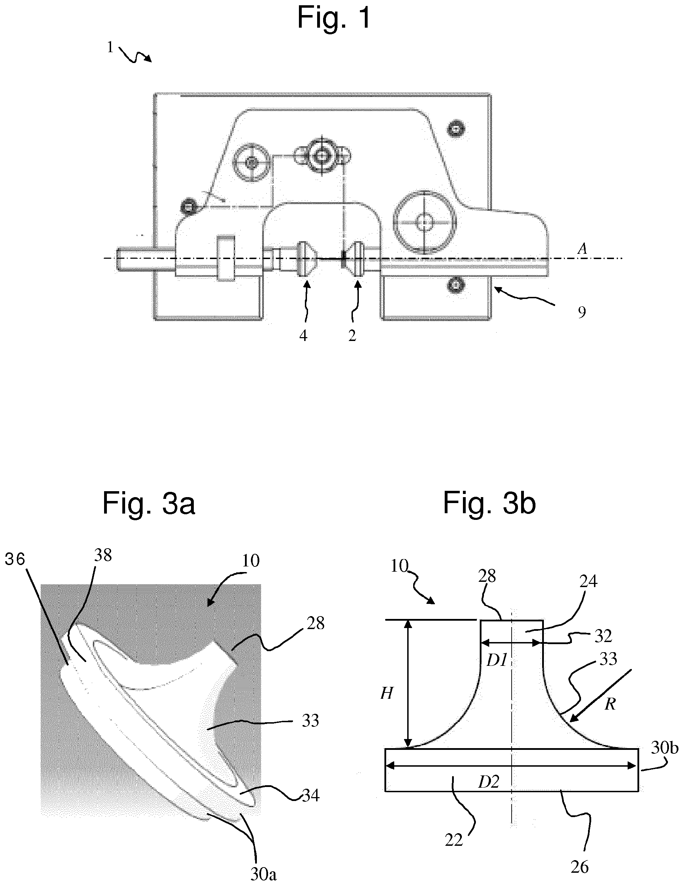

Faisant référence aux figures 2a, 2b ainsi qu'aux figures 3a, 3b, le dispositif de posage 2 comprend un élément de concentration de champ 10 comprenant une partie de base 22 et une partie de concentration de flux 24. La partie de base 22 comprend une surface de base axiale 26 ayant une largeur moyenne ou diamètre D2 à sa périphérie 30b. A l'autre extrémité de l'élément de concentration de champ, la partie de concentration de flux 24 a une surface d'extrémité axiale 28 avec un diamètre D1 inférieur au diamètre D2. La partie de base 22 est reliée à la partie de concentration de flux par une surface courbe 33. Dans une forme d'exécution préférentielle, la surface courbe 33 a une forme continue, c'est-à-dire sans discontinuité et dans une forme d'exécution particulière cette surface courbe peut suivre une forme essentiellement torique avec un rayon de courbure R constante ou variable. Dans des variantes, le profil de la surface courbe 33 a une forme elliptique ou parabolique, la partie de courbure ayant un grand rayon étant disposée du côté de la partie de concentration de flux 24. La hauteur axiale H définissant la distance entre la surface d'extrémité axiale 28 et la partie de base 22 est de préférence plus grande que le rayon de courbure R. La surface courbe rejoignant la partie de concentration de flux 24 peut être connectée à cette partie de manière tangentielle. Dans une forme d'exécution, la partie de concentration de flux 24 comprend une section cylindrique et la surface d'extrémité axiale 28 peut avoir une surface plane ou essentiellement plane orthogonale à l'axe A du dispositif de posage.

La partie de base 22 peut avoir une épaisseur axiale permettant la fixation de l'élément de concentration de champ dans un support 6. La partie de base 22 peut avoir différentes formes configurées pour la fixation du dispositif de posage dans le support. La figure 3a illustre un élément de concentration de champ avec une partie de base comprenant un flasque 34 et une section réduite 36 formant une marche prenant assise dans une forme de logement complémentaire tel qu'illustré dans la figure 2a. Le flasque 34 peut être muni d'une portion polarisant, par exemple un plat 38, pour fixer l'orientation de l'élément de concentration de champ 10 dans le corps 12. Cette dernière caractéristique peut être utile dans des variantes où l'élément de concentration de champ est posé dans le logement 15 et pourrait tourner en l'absence d'un élément de polarisation en raison d'une force magnétique tournant dû à la rotation de l'organe à mesurer ou contrôler 3. La forme courbe 33 ainsi que l'extension cylindrique de la partie de concentration de flux permettent d'optimiser la concentration de flux notamment d'un flux magnétique, mais également la concentration d'un champ électrique de manière optimale en évitant une saturation locale du haut point. En effet, la forme torique ou essentiellement torique permet de concentrer le flux dans un diamètre D1 très réduit à l'extrémité de l'élément de concentration de champ 10 avec des lignes de champ dans la partie approchant et sortant de la surface d'extrémité axiale 28 alignées avec la direction axiale A permettant d'appliquer sur l'organe à mesurer ou à contrôler 3 un champ magnétique ou électrique de haute intensité concentré autour de l'axe A et dirigé dans la direction de l'axe.

Dans une forme d'exécution avantageuse, notamment pour un appareil de mesure ou de contrôle d'axes mobiles de mouvements de pièces horlogères, le diamètre D1 de la surface d'extrémité axiale est compris entre 0,15 et 0,6 millimètres, le diamètre ou la largeur D2 de la partie de base 22 est compris entre 2 et 3 millimètres, le rayon R est compris entre 1,5 et 3 millimètres, par exemple à 2 millimètres, et la hauteur H entre la surface d'extrémité axiale et la base est comprise entre 1 et 2 millimètres par exemple entre 1 et 1,5 millimètres.

L'instrument de mesure 1 peut être intégré dans un appareil de contrôle ou de mesure optique, par exemple comprenant une caméra optique, dans un spectre d'ondes électromagnétiques visibles ou non visibles à l'oeil humain, par exemple dans un appareil à rayons X ou à infrarouge. L'instrument de mesure 1 peut également être intégré dans une machine avec d'autres moyens de détection de formes solides par exemple en utilisant des ultrasons. L'appareil de mesure selon l'invention permet avantageusement de fournir un champ de vision à l'organe à mesurer ou à contrôler libre d'obstacles.

Dans une réalisation particulière utilisant un champ magnétique, on peut utiliser de l'acier doux AFK502 pour le l'élément de concentration de champ magnétique et des aimants en terres rares ayant un champ de saturation supérieur à 1 Tesla pour le générateur de champ magnétique.

Dans une réalisation particulière utilisant un champ électrique, on peut utiliser utilisant des condensateurs électriques à la place des aimants et un matériau conducteur d'électricité formant l'élément de concentration de champ ou recouvrant l'élément de concentration de champ, par exemple plaqué en or.

On notera enfin que la partie de concentration du flux peut être selon une variante de réalisation magnétiquement inhomogène et présenter une perméabilité supérieur près de son axe de révolution.

Les avantages de cette invention, comprennent les caractéristiques suivantes :
- Grande productivité de mesure
- Répétabilité des conditions de mesure
- Mesure dynamique précise à ± 0.15° du défaut d'inclinaison des mobile tournants horlogers (planches, arbres, spiraux, etc...)
- Mesure dynamique précise à ± 0.005 mm du défaut de centrage et du mal rond des mobiles tournants horlogers (planches, arbres, spiraux, etc...)
- Simple étalonnage et vérification de l'appareil par imagerie magnétique
- Dimensions contenues
- Déplacement facile
- Mise en oeuvre très facile pour chaque pièce
- Possibilité d'activer la rotation par air pulsé
- Aucune géométrie de la pièce n'est cachée par le posage
- Possibilité de mesurer les défauts d'inclinaison, de centrage et du mal rond des pièces horlogères lourdes
- Possibilité de mesurer les défauts d'inclinaison, de centrage, et mal rond des pièces horlogères déséquilibrées
- Interchangeabilité des embouts pour adapter le posage aux différentes configurations des pièces.

### Liste de références

- appareil de mesure 1
- dispositif de posage 2
- élément de concentration de champ 10
- partie de base 22
- surface de base axiale 26
- périphérie 30a, 30b
- portion polarisant 38
- partie de concentration de flux 24
- surface d'extrémité axiale 28
- périphérie 32
- surface courbe 33
- flasque 34
- section réduite 36
- support 6
- corps 12
- cavité 13
- logement 15
- paroi d'extrémité 14
- partie support 16
- embout 18
- surface de travail 20
- générateur de champ 8
- aimant /condensateur électrique
- dispositif complémentaire de posage 4
- organe à mesurer / contrôler 3
- axe pivotant 5
- première extrémité 7a
- deuxième extrémité 7b

## Revendications

1. Dispositif de posage (2) comprenant un support (6) comprenant un corps (12), une surface de travail (20) disposée sur une face du support, un élément de concentration de champ (10) monté dans un logement (15) du support, et un générateur de champ (8), l'élément de concentration de champ comprenant une partie de base (22) et une partie de concentration de flux (24) disposée en proximité de la surface de travail, la partie de base comprenant une surface de base axiale (26) ayant une largeur moyenne ou diamètre D2 à sa périphérie plus grand qu'une diamètre D1 de la partie de concentration de flux au niveau d'une surface d'extrémité axiale (28), la partie de base étant reliée à la partie de concentration de flux par une surface courbe (33).

2. Dispositif selon la revendication précédente **caractérisé en ce que** la surface courbe a une forme continue.

3. Dispositif selon la revendication précédente **caractérisé en ce que** la surface courbe suit une forme torique avec un rayon de courbure R constante.

4. Dispositif selon la revendication 2 **caractérisé en ce que** la surface courbe suit une forme torique avec un rayon de courbure R variable, la partie de courbure ayant un grand rayon disposé du côté de la partie de concentration de flux.

5. Dispositif selon l'une des trois revendications précédentes **caractérisé en ce que** la surface courbe rejoint la partie de concentration de flux de manière tangentielle.

6. Dispositif selon l'une des revendications précédentes **caractérisé en ce que** la partie de concentration de flux comprend une section cylindrique et une surface d'extrémité axiale (28) plane ou essentiellement plane orthogonale à l'axe A du dispositif de posage.

7. Dispositif selon l'une des revendications précédentes **caractérisé en ce que** le diamètre D1 de la surface d'extrémité axiale est compris entre 0,15 et 0,6 millimètres, le diamètre ou la largeur D2 de la partie de base est compris entre 2 et 3 millimètres, le rayon R de la surface courbe est compris entre 1,5 et 4 millimètres.

8. Dispositif de posage selon l'une des revendications précédentes **caractérisé en ce que** le matériau de l'élément de concentration de champ est en un acier doux, **caractérisé par** un champ coercitif égal ou inférieur à 5 kA/m et par une perméabilité magnétique maximale égale ou supérieure à 100.

9. Dispositif de posage selon l'une des revendications précédentes **caractérisé en ce que** le générateur de champ est un aimant permanent en terres rares ayant un champ de saturation supérieur à 1 Tesla.

10. Dispositif de posage selon l'une des revendications précédentes **caractérisé en ce que** le générateur de champ comprend un condensateur électrique.

11. Dispositif de posage selon l'une des revendications précédentes **caractérisé en ce que** le générateur de champ est disposé dans une cavité (13) formée dans le corps du support, le générateur de champ venant en butée ou en proximité d'une surface de base axiale (26) d'une partie de l'élément de concentration de champ.

12. Dispositif de posage selon l'une des revendications précédentes **caractérisé en ce que** le matériau de la surface de travail est choisi parmi des corindons, le diamant et des matières céramiques.

13. Dispositif de posage selon l'une des revendications précédentes **caractérisé en ce que** la surface de travail est sur un embout (18) assemblé sur une paroi d'extrémité (14) fermant le logement (15).

14. Dispositif de posage selon la revendication précédente **caractérisé en ce que** le logement comprend des parois cylindriques et la paroi d'extrémité est réalisée sous la forme essentiellement d'un disque circulaire avec un orifice au centre pour la fixation de l'embout.

15. Dispositif de posage selon une des revendications précédentes **caractérisé en ce que** la partie de concentration du flux est magnétiquement inhomogène, présentant une perméabilité supérieure près de son axe de révolution.

16. Instrument de mesure ou de contrôle (1) **caractérisé en ce qu'**il comprend un bâti (9) supportant un premier dispositif de posage (2) et un deuxième dispositif complémentaire de posage (4), les deux dispositifs de posage étant alignés sur un même axe A, les dispositifs de posage étant orientés l'un par rapport à l'autre de manière opposée et configurés pour recevoir un organe à mesurer ou à contrôler (3) entre les dispositifs, au moins un desdits premier et deuxième dispositifs de posage étant constitué par un dispositif de posage selon l'une des revendications précédentes.

17. Instrument selon la revendication précédente **caractérisé en ce que** le bâti comprend un dispositif à glissière permettant de varier la distance entre les deux dispositifs de posage afin de pouvoir mesurer ou contrôler des organes de longueurs différentes.

18. Instrument selon l'une des deux revendications précédentes **caractérisé en ce qu'**il est configuré pour qu'une première extrémité (7a) d'un axe (5) d'un organe à contrôler (3) soit en appui contre un premier des dispositifs de posage (2), l'autre extrémité (7b) étant séparée par un petit espace du dispositif complémentaire de posage (4), la force d'attraction magnétique et/ou électrique appliquée par le premier dispositif de posage étant plus grande que par le dispositif complémentaire de posage.

19. Appareil de mesure ou de contrôle optique comprenant une caméra optique et un instrument selon l'une des trois revendications précédentes.

## Patentansprüche

1. Anordnungsvorrichtung (2), umfassend einen Träger (6) mit einem Körper (12), eine Arbeitsoberfläche (20), die auf einer Seite des Trägers angeordnet ist, ein Feldkonzentrationselement (10), das in einem Aufnahmeraum (15) des Trägers angeordnet ist, und einen Feldgenerator (8), wobei das Feldkonzentrationselement einen Basisabschnitt (22) und einen Flusskonzentrationsabschnitt (24), der in der Nähe der Arbeitsoberfläche angeordnet ist, aufweist, wobei der Basisabschnitt eine axiale Basisoberfläche (26) mit einer mittleren Breite oder einem Durchmesser D2 an seinem Umfang besitzt, der größer als ein Durchmesser D1 des Flusskonzentrationsabschnitts auf Höhe einer axialen Endfläche (28) ist, und der Basisabschnitt mit dem Flusskonzentrationsabschnitt durch eine gekrümmte Oberfläche (33) verbunden ist.

2. Vorrichtung nach dem vorhergehenden Anspruch, **dadurch gekennzeichnet, dass** die gekrümmte Oberfläche eine stetige Form hat.

3. Vorrichtung nach dem vorhergehenden Anspruch, **dadurch gekennzeichnet, dass** die gekrümmte Oberfläche einer Torusform mit konstantem Krümmungsradius R folgt.

4. Vorrichtung nach Anspruch 2, **dadurch gekennzeichnet, dass** die gekrümmte Oberfläche einer Torusform mit veränderlichem Krümmungsradius R folgt, wobei der Krümmungsabschnitt mit einem großen Radius auf Seiten des Flusskonzentrationsabschnitts angeordnet ist.

5. Vorrichtung nach einem der drei vorhergehenden Ansprüche, **dadurch gekennzeichnet, dass** die gekrümmte Oberfläche sich tangential an den Flusskonzentrationsabschnitt anschließt.

6. Vorrichtung nach einem der vorhergehenden Ansprüche, **dadurch gekennzeichnet, dass** der Flusskonzentrationsabschnitt einen zylindrischen Abschnitt und eine axiale Endfläche (28), die eben oder im Wesentlichen eben und senkrecht zu der Achse A der Anordnungsvorrichtung ist, umfasst.

7. Vorrichtung nach einem der vorhergehenden Ansprüche, **dadurch gekennzeichnet, dass** der Durchmesser D1 der axialen Endfläche im Bereich von 0,15 bis 0,6 mm liegt, der Durchmesser oder die Breite D2 des Basisabschnitts im Bereich von 2 bis 3 mm liegt und der Radius R der gekrümmten Oberfläche im Bereich von 1,5 bis 4 mm liegt.

8. Anordnungsvorrichtung nach einem der vorhergehenden Ansprüche, **dadurch gekennzeichnet, dass** das Material des Feldkonzentrationselements ein weicher Stahl ist, **gekennzeichnet durch** eine Koerzitivfeldstärke, die gleich oder kleiner als 5 kA/m ist, und durch eine maximale magnetische Permeabilität, die gleich oder größer als 100 ist.

9. Anordnungsvorrichtung nach einem der vorhergehenden Ansprüche, **dadurch gekennzeichnet, dass** der Feldgenerator ein Seltenerd-Permanentmagnet mit einem Sättigungsfeld, das größer als 1 Tesla ist, ist.

10. Anordnungsvorrichtung nach einem der vorhergehenden Ansprüche, **dadurch gekennzeichnet, dass** der Feldgenerator einen elektrischen Kondensator umfasst.

11. Anordnungsvorrichtung nach einem der vorhergehenden Ansprüche, **dadurch gekennzeichnet, dass** der Feldgenerator in einer Ausnehmung (13) angeordnet ist, die in dem Körper des Trägers ausgebildet ist, wobei der Feldgenerator an einer axialen Basisoberfläche (26) eines Teils des Feldkonzentrationselements anliegt oder in deren Nähe angeordnet ist.

12. Anordnungsvorrichtung nach einem der vorhergehenden Ansprüche, **dadurch gekennzeichnet, dass** das Material der Arbeitsoberfläche aus Korund, Diamant und Keramikmaterialien gewählt ist.

13. Anordnungsvorrichtung nach einem der vorhergehenden Ansprüche, **dadurch gekennzeichnet, dass** die Arbeitsoberfläche auf einer Endabdeckung (18) angeordnet ist, die an eine Endwand (14) angefügt ist, die den Aufnahmeraum (15) verschließt.

14. Anordnungsvorrichtung nach den vorhergehenden Anspruch, **dadurch gekennzeichnet, dass** der Aufnahmeraum zylindrische Wände umfasst und die Endwand in der Form einer im Wesentlichen kreisförmigen Scheibe mit einer Öffnung in der Mitte für die Befestigung der Endabdeckung ausgebildet ist.

15. Anordnungsvorrichtung nach einem der vorhergehenden Ansprüche, **dadurch gekennzeichnet, dass** der Flusskonzentrationsabschnitt magnetisch inhomogen ist und in der Nähe seiner Drehachse eine größere Permeabilität aufweist.

16. Mess- oder Kontrollinstrument, **dadurch gekennzeichnet, dass** es einen Rahmen (9) umfasst, der eine erste Anordnungsvorrichtung (2) und eine zweite, komplementäre Anordnungsvorrichtung (4) trägt, wobei die beiden Anordnungsvorrichtungen auf dieselbe Achse A ausgerichtet sind, wobei die Anordnungsvorrichtungen relativ zueinander entgegengesetzt ausgerichtet sind und konfiguriert sind, ein zu messendes oder zu kontrollierendes Organ (3) zwischen den Vorrichtungen aufzunehmen, wobei mindestens eine der ersten und der zweiten Anordnungsvorrichtungen durch eine Anordnungsvorrichtung nach einem der vorhergehenden Ansprüche gebildet ist.

17. Instrument nach dem vorhergehenden Anspruch, **dadurch gekennzeichnet, dass** der Rahmen eine Gleitschienenvorrichtung umfasst, die ermöglicht, den Abstand zwischen den beiden Anordnungsvorrichtungen zu verändern, um Organe mit unterschiedlichen Längen messen oder kontrollieren zu können.

18. Instrument nach einem der beiden vorhergehenden Ansprüche, **dadurch gekennzeichnet, dass** es konfiguriert ist, damit sich ein erstes Ende (7a) einer Achse (5) eines zu kontrollierenden Organs (3) an einer ersten der Anordnungsvorrichtungen (2) abstützt und das andere Ende (7b) durch einen kleinen Zwischenraum von der komplementären Anordnungsvorrichtung (4) getrennt ist, wobei die magnetische und/oder elektrische Anziehungskraft, die durch die erste Anordnungsvorrichtung ausgeübt werden, größer sind als jene der komplementären Anordnungsvorrichtung.

19. Optisches Mess- oder Kontrollgerät, umfassend eine optische Kamera und ein Instrument nach einem der drei vorhergehenden Ansprüche.

## Claims

1. Support device (2) including a support (6) having a body (12), a work surface (20) arranged on a surface of the support, a field concentration element (10) mounted inside a housing (15) of the support, and a field generator (8), the field concentration element including a base portion (22) and a flux concentration portion (24) arranged in proximity to the work surface, the base portion including an axial base surface (26) having a mean width or diameter D2 at the periphery thereof which is greater than a diameter D1 of the flux concentration portion on an axial end surface (28), the base portion being connected to the flux concentration portion by a curved surface (33).

2. Device according to the preceding claim, **characterized in that** the curved surface has a continuous shape.

3. Device according to the preceding claim, **characterized in that** the curved surface has a toroidal shape with a constant radius of curvature R.

4. Device according to claim 2, **characterized in that** the curved surface has a toroidal shape with a variable radius of curvature R, the curved portion having a large radius arranged on the side of the flux concentration portion.

5. Device according to any of the preceding three claims, **characterized in that** the curved surface joins the flux concentration portion tangentially.

6. Device according to any of the preceding claims, **characterized in that** the flux concentration portion includes a cylindrical section and a plane or essentially plane axial end surface (28) orthogonal to the axis A of the support device.

7. Device according to any of the preceding claims, **characterized in that** the diameter D1 of the axial end surface is comprised between 0.15 and 0.6 millimetres, the diameter or the width D2 of the base portion is comprised between 2 and 3 millimetres, the radius R of the curved surface is comprised between 1.5 and 4 millimetres.

8. Support device according to any of the preceding claims, **characterized in that** the material of the field concentration element is a soft steel, **characterized by** a coercive field equal to or less than 5 kA/m and by maximum magnetic permeability equal to or greater than 100.

9. Support device according to any of the preceding claims, **characterized in that** the field generator is a rare earth permanent magnet having a saturation field of more than 1 Tesla.

10. Support device according to any of the preceding claims, **characterized in that** the field generator includes an electrical capacitor.

11. Support device according to any of the preceding claims, **characterized in that** the field generator is arranged inside a cavity (13) formed in the body of the support, the field generator abutting or being in proximity to an axial base surface (26) of one portion of the field concentration element.

12. Support device according to any of the preceding claims, **characterized in that** the material of the work surface is selected from among corundums, diamond and ceramic materials.

13. Support device according to any of the preceding claims, **characterized in that** the work surface is on an end piece (18) assembled on an end wall (14) closing the housing (15).

14. Support device according to the preceding claim, **characterized in that** the housing includes cylindrical walls and the end wall is made essentially in the form of a circular disc with a central orifice for attaching the end piece.

15. Support device according to any of the preceding claims, **characterized in that** the flux concentration portion is magnetically inhomogeneous, having high permeability close to the axis of revolution thereof.

16. Measuring and checking instrument (1) **characterized in that** the instrument includes a frame (9) supporting a first support device (2) and a second complementary support device (4), the two support devices being aligned on the same axis A, the support devices being oriented in an opposite manner in relation to each other and configured to receive a member (3) to be measured or checked between the devices, at least one of said first and second support devices being formed by a support device according to any of the preceding claims.

17. Instrument according to the preceding claim, **characterized in that** the frame includes a slide device for varying the distance between the two support devices to enable members of different lengths to be measured or checked.

18. Instrument according to any of the preceding two claims, **characterized in that** the instrument is configured so that a first end (7a) of an arbor (5) of a member (3) to be checked is abutting against a first of the support devices (2), the other end (7b) being separated by a small space from the complementary support device (4), the magnetic and/or electrical force of attraction applied by the first support device being greater than that applied by the complementary support device.

19. Optical checking or measuring apparatus including an optical camera and an instrument according to any of the preceding three claims.
